# EUROPEAN PATENT SPECIFICATION

(11) **EP 1 447 209 B1**
(45) Date of publication and mention of the grant of the patent: **09.04.2008**
(21) Application number: 04002543.9
(22) Date of filing: 05.02.2004
(51) Int. Cl.: B29D 30/16, B29D 30/38, B60C 9/02

(54) **Method for manufacturing carcass plies for a tire**
Verfahren zur Herstellung einer Karkassenlage für Reifen
Procédé pour la fabrication d'une nappe de carcasse pour pneu

(30) Priority: 11.02.2003 US 365374
(43) Date of publication of application: 18.08.2004
(73) Proprietor: THE GOODYEAR TIRE & RUBBER COMPANY, Akron, OH 44316-0001 (US)
(72) Inventor: Weissert, James Thomas, Ohio 44333 (US); Sieverding, Mark Anthony, Ohio 44685 (US); Delgado, Andres Ignacio, Ohio 44256 (US); Currie, William Dudley, Ohio 44224 (US); Rodia, Ernest Joseph, Ohio 44321 (US)
(74) Representative: Kutsch, Bernd

(56) References cited:
- EP-A- 0 916 522
- EP-A- 1 101 597
- US-A1- 2001 020 518
- US-A1- 2002 117 265
- PATENT ABSTRACTS OF JAPAN vol. 2000, no. 25, 12 April 2001 (2001-04-12) & JP 2001 233016 A (BRIDGESTONE CORP), 28 August 2001 (2001-08-28)
- PATENT ABSTRACTS OF JAPAN vol. 1999, no. 12, 29 October 1999 (1999-10-29) & JP 11 198247 A (BRIDGESTONE CORP), 27 July 1999 (1999-07-27)

## Description

### Field of the invention

This invention relates to a method of manufacturing an annular toroidally shaped cord reinforced ply for a tire, according to the preamble of claim 1.

### Background of the Invention

Historically, the pneumatic tire has been fabricated as a laminate structure of generally toroidal shape having beads, a tread, belt reinforcement, and a carcass.

In the first stage of assembly the prior art carcass will normally include one or more plies, and a pair of sidewalls, a pair of apexes, an innerliner (for a tubeless tire), a pair of chafers and perhaps a pair of gum shoulder strips. Annular bead cores can be added during this first stage of tire building and the plies can be turned around the bead cores to form the ply turnups.

This intermediate article of manufacture would be cylindrically formed at this point in the first stage of assembly. The cylindrical carcass is then expanded into a toroidal shape after completion of the first stage of tire building. Reinforcing belts in the tread are added to this intermediate article during a second stage of tire manufacture, which can occur using the same building drum or work station.

This form of manufacturing a tire from flat components that are then formed toroidially limits the ability of the tire to be produced in a most uniform fashion.

US-A- 3,935,894 discloses that carcass plies could be laid in hoops or arcs having the ends of the carcass cord plies extending in a circumferential direction. Thus a tire could be dispensed of any circular bead core in the beads and the carcass would not have any lateral parts turned up radially with the edges delimited by cut cables. While this tire was not commercially viable in its time, new inventions have been described also constructing the ply using hoops of circular arcs so that the individual ply cords are laid across the convex toroidal cross section in its early stage of manufacture as opposed to being made in the flat construction. Such a concept is used by Michelin in a process called C3M wherein the cords extend in linear paths across the carcass. Early versions of the C3M process included wrapping the ply cords around bead cores to effect a change in cord direction. These ply cords were always placed in tension around a circular arcuate shape in the course of manufacture. Later versions of the C3M process included turning these linear extending cords in an opposite direction and sandwiching these cords between radially extending bead layers. By interposing the looped end of ply cords between radially extending bead cords the manufacture of the carcass appears to be simplified to some extent. A similar process is described in EP-A- 0897813.

In all these methods of manufacturing ply cords on a toroidal surface it has been determined that a tension was required and that the cords must be laid in a straight line on a convex surface from turnaround to turnaround. In other words, the cord angle could be arranged other than 90°, however, 90° is a preferred way in the prior art of orienting the cord path because 90° prevents any likelihood of slippage off angle because 90° is the shortest ply path. These angles could not be adjusted in any fashion other than to provide a linear path. This is true because the tension placed on the cord during the manufacture was required as the cord is being applied on the round or convex surface. In each step, the known prior art methods of manufacturing such a carcass ply uses a technique called "winding" wherein the turnarounds applied tension across the entire ply path. Such a tire winding procedure to apply ply cords can only work on a convex surface and does not allow "placement" on a toroidal shape having a concavity as is common in the true manufacture of the molded tire in the sidewall regions near the beads.

It is an object of the present invention to provide a method of manufacturing ply cords that can allow placement on concave and convex surfaces similar to the finished tire. It a further object of the present invention not to require tension from turnaround to turnaround as the cord path is being established thereby permitting nonlinear cord paths to be achieved. It is a further object of the present invention to allow the cord loop endings or turnarounds to occur at different diameters. There is still a further object of the invention that the placement of the ply cords can be such that toroidially shaped ply cords can be placed that would further include forming turnups and allow for anchoring the ply using the bead cores. Furthermore, another object of the invention is to enable the pitch between the cords to uniformly increase as the diameter increases along the cord path. Preferably, the cord pitch increases uniformly as the diameter increases along the ply path due to a coordinated differential motion between the application of the cord and the movement of the toroidal surface.

US-A- 2001/0020518 describes a method according to the preamble of claim 1. Similar methods are described in EP-A- 1 101 597 and US-A-2002/0117265. Other relevant prior art on the manufacturing of carcass reinforcement is disclosed in EP-A- 0 916 522, JP-A- 2001-233016 and JP-A-11-198247.

### Summary of the Invention

The above objects are achieved according to the invention by the method of manufacturing an annular toroidially-shaped cord reinforced ply for a tire according to claim 1. Particular embodiments of the invention are the subject of the dependent claims. Preferably, the method further includes dispensing the one or more cords from spools and guiding the cord in a predetermined path as the cord is being dispensed. This method allows the step of forming loop ends to occur at more than one diameter on the toroidal surface.

Preferably, the indexing of the toroidal surface establishes the cord pitch uniformly in discrete angular spacing at specific diameters.

The method as described above permits the forming of ply turnups by extending the elastomeric loops and the loop ends on each side of the toroidal surface.

The above-method permits an unusual number of ply cord paths to be taken in rather unique patterns. In one embodiment, the forming of loop ends includes locating one loop end at a radially inner diameter, one or more adjacent loop ends at radially outer diameters in a repeating pattern on each side of the toroidially shaped elastomeric surface. The loop ends can be varied in location such that a plurality of loop ends can occur at a first radially inner diameter dᵢ and a plurality of other loop ends at one or more radially outer larger diameters dₒ, dₒ being greater than dᵢ, thereby forming ply paths having varying amounts of cord pitch at different locations on the toroidal surface.

The above method is best performed using an apparatus for forming an annular toroidially shaped cord reinforced ply which has a toroidal mandrel, a means to dispense one or more cords, a means to guide the dispensed cords along predetermined paths, a means to place an elastomeric layer on the toroidal mandrel, a means to stitch the cords onto the elastomeric layer, and a means to hold the cords while loop ends are formed.

The toroidal mandrel is preferably rotatable about its axis and a means for rotating is provided which permits the mandrel to index circumferentially as the cord is placed in a predetermined cord path. The guide means preferably includes a multi axis robotic computer controlled system and a ply mechanism to permit the cord path to follow the contour of the mandrel including the concave and convex profiles.

### Definitions

"Axial" and "axially" means the lines or directions that are parallel to the axis of rotation of the tire.

"Bead" or "Bead Core" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chaffers.

"Belt Structure" or "Reinforcing Belts" means at least two annular layers or plies of parallel cords, woven or unwoven, underlying the tread, unanchored to the bead, and having both left and right cord angles in the range from 17° to 27° with respect to the equatorial plane of the tire.

"Circumferential" means lines or directions extending along the perimeter of the surface of the annular tread perpendicular to the axial direction.

"Carcass" means the tire structure apart from the belt structure, tread, undertread, over the plies, but including beads, if used, on any alternative rim attachment.

"Placement" means positioning a cord on a surface by means of applying pressure to adhere the cord at the location of placement along the desired ply path.

"Radial" and "radially" mean directions radially toward or away from the axis of rotation of the tire.

"Winding" means a wrapping of a cord under tension onto a convex surface along a linear path.

### Brief Description of the Drawings

The invention will be described by way of example and with reference to the accompanying drawings in which:
Figure 1 shows a perspective view of the apparatus usable to carry out the present invention.
Figures 2 and 3 illustrate cross-sectional views of the toroidal mandrel
Figures 4 through 9 show a simplified schematic view of a single cord being placed in a predetermined cord path in a flat view for ease of understanding.
Figures 10 through 15 show a simplified view of the cords as they are applied on the toroidal mandrel.
Figure 16 shows a simplified schematic for dispensing a plurality of cords simultaneously.
Figure 17 is a partial side view of an exemplary cord path.
Figure 18 is a partial flat view of the exemplary cord path of Figure 14 showing both sides of the ply path.
Figures 19 through 25 show a variety of exemplary ply path designs.

### Detailed Description of the Invention

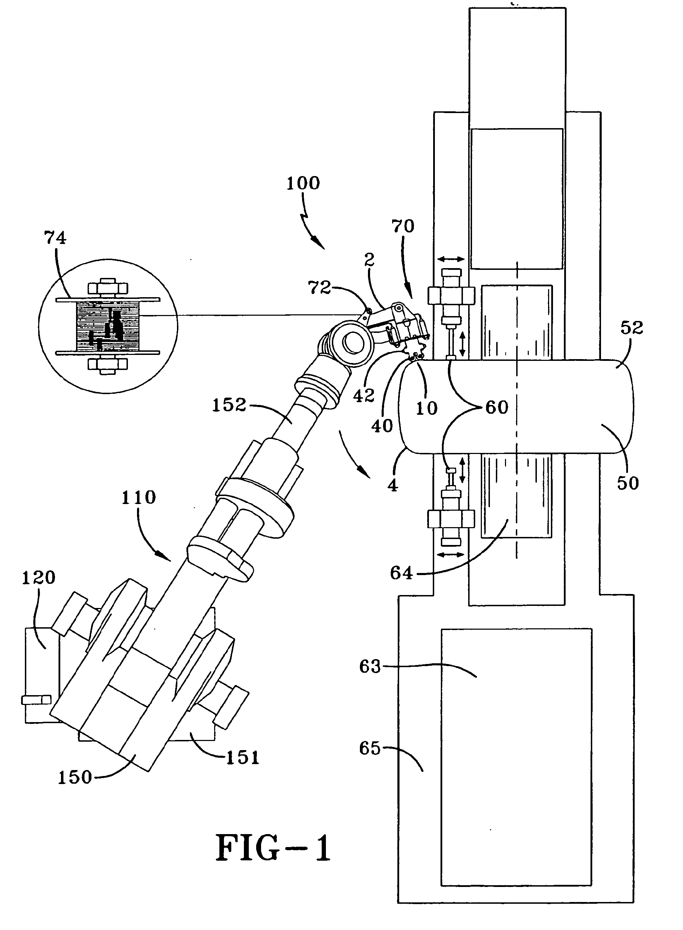

With reference to Figure 1, a perspective view of an apparatus is illustrated. As shown, the apparatus 100 has a guide means which has, in addition to the ply mechanism 70, a robotic computer controlled system 110 for placing the cord 2 onto the toroidal surface 50. A means for applying an elastomeric layer 4 onto the mandrel 52 is provided which can include a server mechanism to feed strips of the layer 4 to the mandrel 52.

The robotic computer controlled system 110 has a computer 120 and preprogrammed software which dictates the ply path 10 to be used for a particular tire size. Each movement of the system 110 can be articulated with very precise movements.

The robot 150 which is mounted on a pedestal 151 has a robotic arm 152 which can be moved in preferably six axes. The manipulating arm 152 has the ply mechanism 70 attached as shown.

Loop end forming mechanisms 60 are positioned on each side 56 of the toroidal mandrel 52. The robotic arm 152 feeds the ply cord 2 in predetermined paths 10 and the loop end forming mechanism 60 holds the cord 2 in place as a looped end 12 is formed. Each time an end 12 is formed the toroidal mandrel 52 is rotated to index to the next pitch P and the adjacent ply path 10 around the toroidal mandrel 52.

The movement of the ply mechanism 70 permits convex curvatures to be coupled to concave curvatures near the bead areas thus mimicking the as molded shape of the tire. A means 63 for rotating the mandrel 52 about its axle 64 are all mounted to a rigid frame 65 as shown.

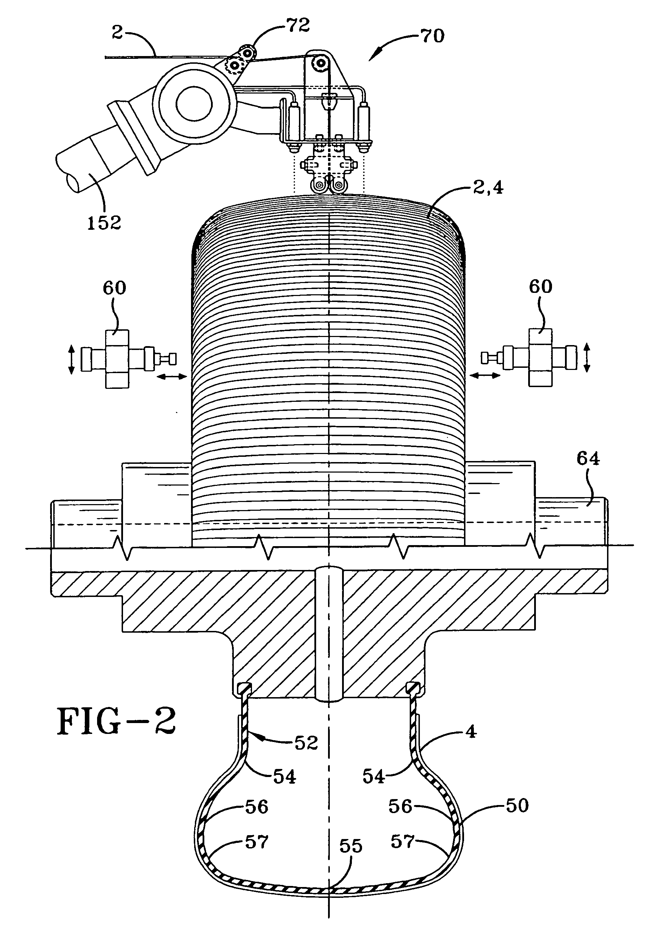

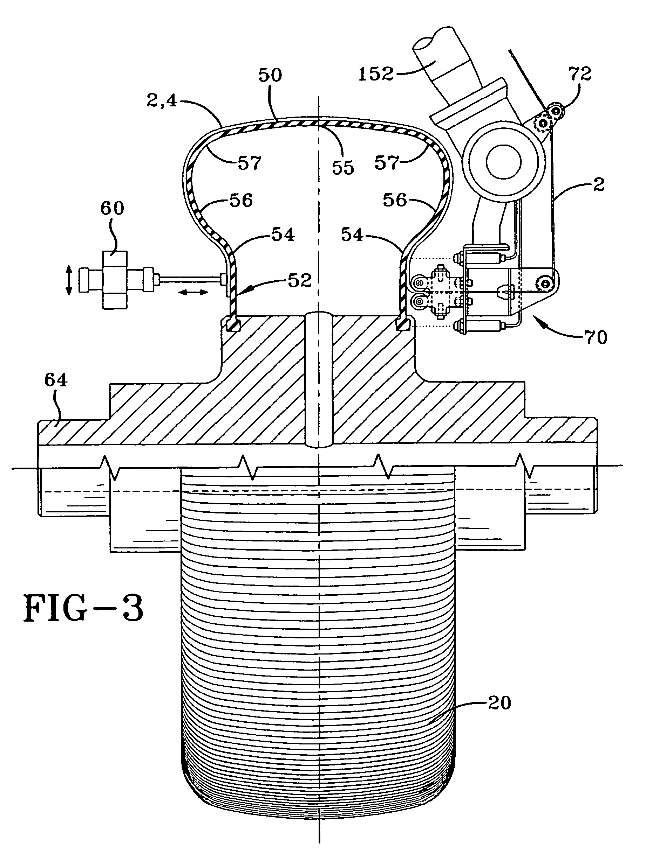

With reference to Figures 2 and 3, a cross-sectional view of the toroidal mandrel 52 is shown. As illustrated the radially inner portions 54 on each side 56 of the toroidal mandrel 52 have a concave curvature that extends radially outward toward the crown area 55 of the toroidal mandrel 52. As the concave cross section extends radially outward toward the upper sidewall portion 57 the curvature transitions to a convex curvature in what is otherwise known as the crown area 55 of the toroidal mandrel 52. This cross section very closely duplicates the as molded cross section of a tire.

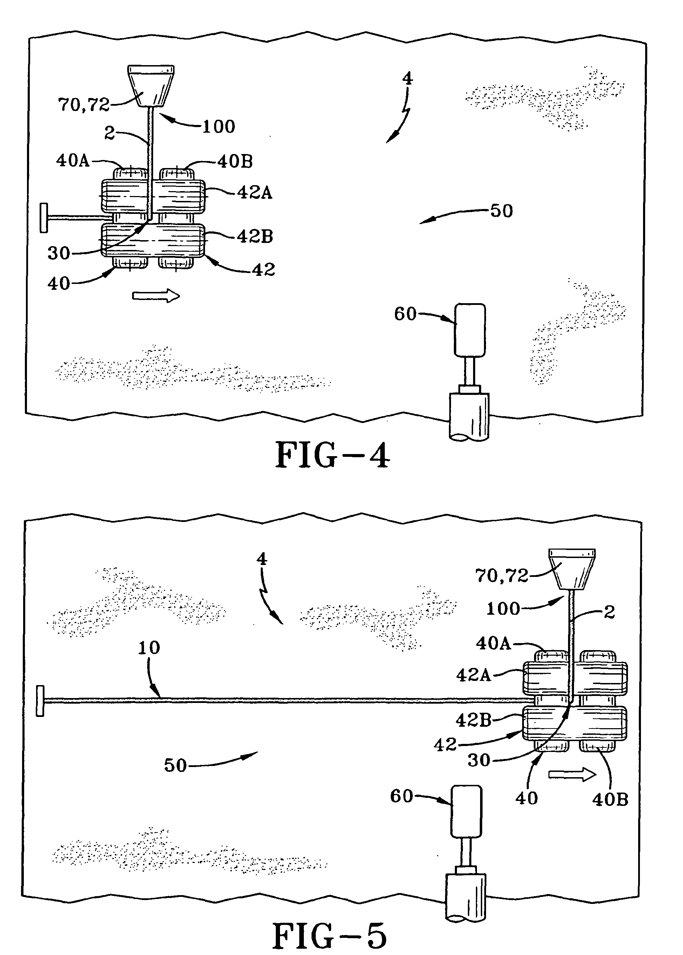

With reference to Figures 4 through 9, the means for guiding the dispensed cords has a ply mechanism 70 as shown in a schematic form which illustrates how the ply cord 2 is laid onto an elastomeric surface 4 in a predetermined ply path 10. The schematic views simply illustrate the basic working components of the ply mechanism 70 and give a very good illustration of how the mechanism 70 works to place the cords 2 in a very precise location.

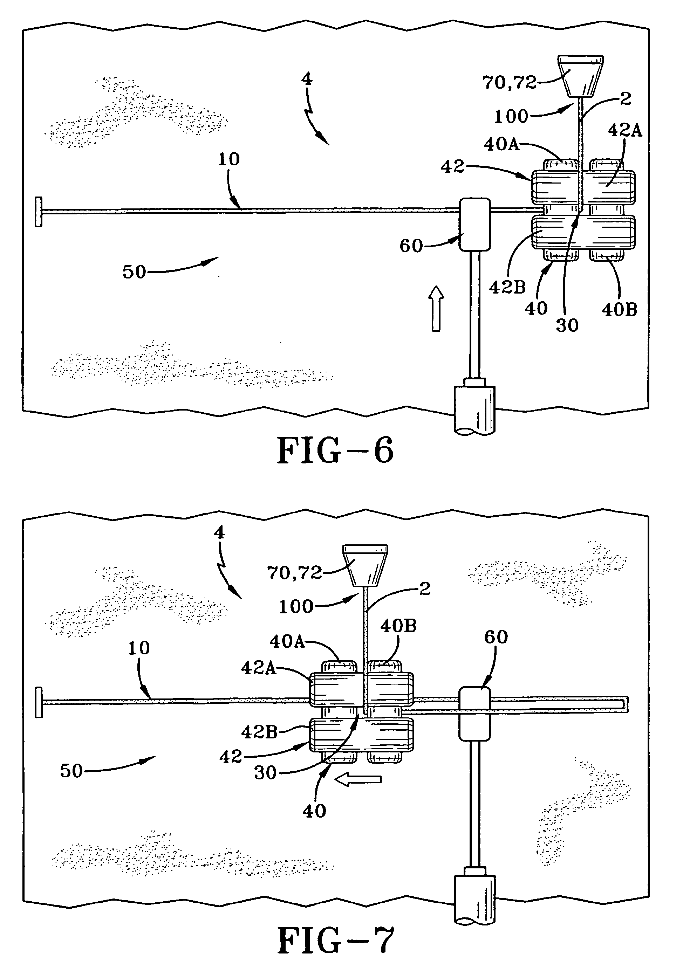

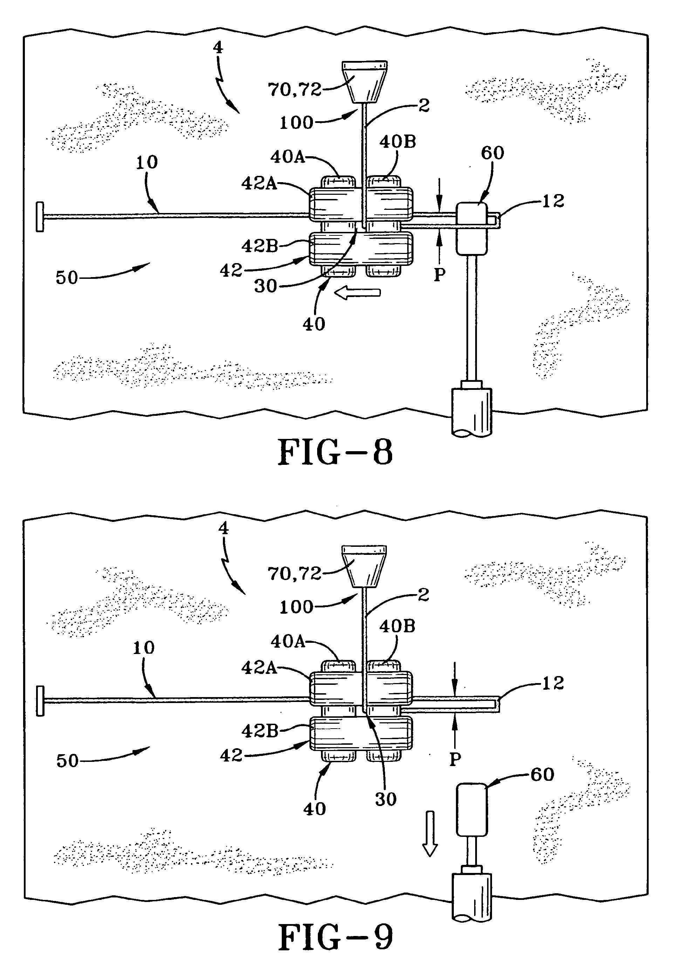

To advance the cords 2 on a specified path 10, the mechanism 70 which contains two pairs of parallel pins or rollers 40, 42 with the second pair 42 placed 90° relative to the first pair 40 and in a physical space of about one inch above the first pair 40 and forms a center opening 30 between the two pairs of rollers which enables the cord path 10 to be maintained in this center. As illustrated, the cords 2 are held in place by a combination of embedding the cord into the elastomeric compound 4 previously placed onto the toroidal surface 50 and the surface tackiness of the uncured compound. Once the cords 2 are properly applied around the entire circumference of the toroidal surface 50 a subsequent lamination of elastomeric topcoat compound (not shown) can be used to complete the construction of the ply 20. As illustrated, the bottom pair of rollers 40 uses a first roller 40A to embed the cord 2 on a forward traverse across the toroidal surface 50 as illustrated in Fig. 4. In Fig. 5 once the cord path 10 has been transferred across the toroidal surface 50 the mechanism 100 stops and the holding mechanism and loop forming plate mechanism 60 advances onto the cord 2 and presses the cord 2 against the toroidal surface 50 as illustrated in Fig. 6. The mechanism 100 then reverses its path 10 forming a loop 12 in the ply cord path 10. At this point the second roller 40B of the first pair 40 pulls the cord 2 back across the toroidal surface 50. The top second pair 42 positions the cord 2 in a parallel path 10 and creates the spacing between the cords 2 hereinafter referred to as the pitch when the mandrel 52 having the toroidal surface 50 covered by the bottom coat compound laminate 4 advances for the return path. In other words as shown in Fig. 7 of the preferred embodiment the toroidal surface 50 is indexed or advanced slightly allowing a circumferential spacing or pitch (P) to occur between the first ply pathway down in the second return ply path. As illustrated in Fig. 7 the loop 12 that is formed on the reverse traverse is slightly shifted and therefore allowed to be pulled against the loop forming mechanism 60 as the cord 2 clinches against the pin to create the desired loop position. As shown in Fig. 8 a looped end 12 is formed and the second ply path 10 is laid on the toroidal surface 50 parallel to the first ply path 10. As shown in Fig. 9, the loop mechanism 60 then retracts and the second ply path 10 is finished. This process is repeated to form a series of cords 2 that are continuous and parallel within at least certain portions of the ply path 10. This is accomplished by having toroidal mandrel 52 with the toroidal surface 50 with an elastomeric compound 4 laminated onto it to index or advance uniformly about its axis with each traverse of the pair of rollers pins 40, 42 to create a linearly parallel path 10 uniformly distributed about the toroidal surface 50. By varying the advance of the cord 2 as the mechanism 100 traverses, it is possible to create non-linear parallel cord paths 10 to tune tire stiffness and to vary flexure with the load.

Preferably the cord 2 is wrapped around a tension or ply mechanism 70 to adjust and maintain the required tension in the cord 2. If it is too tight it will lift the cord from the coat laminate when the roller pins 40, 42 reverse direction. If it is too loose it will not create a loop at the correct length around the loop pin mechanism 60. As an example, tension on the cord 2 is created as it passes between a series of rollers 72 capable of adjusting and maintaining tension as needed for the process and the roller 40, 42. What is different about the present technique is that the amount of tension applied has to be sufficiently small that it does not lift the cords 2 from their placed position on the toroidal surface 50. In other words, the cord 2 is resting on the toroidal surface 50 positioned and stitched to an elastomeric layer 4 such that the tack between the cord 2 and the elastomeric layer 4 is larger than the tension applied by the ply mechanism 70. This permits the cords 2 to lay freely onto the toroidal surface 50 without moving or separating during the ply construction period. This is significantly different from the prior art mechanisms which required linear paths and required a large amount of tension to hold the cord paths 10 as the equipment is traversing over a convex surface to create a laminated ply.

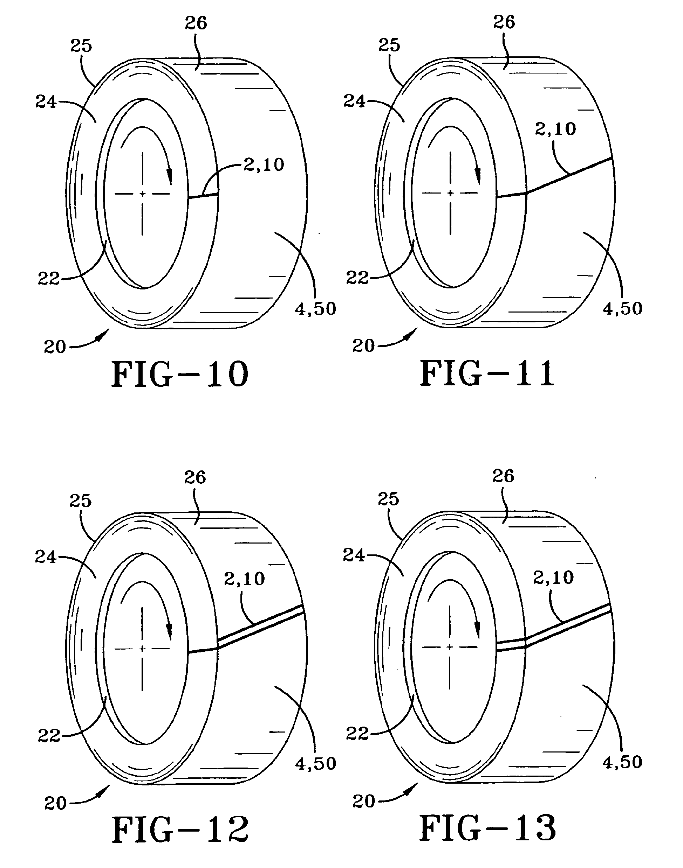

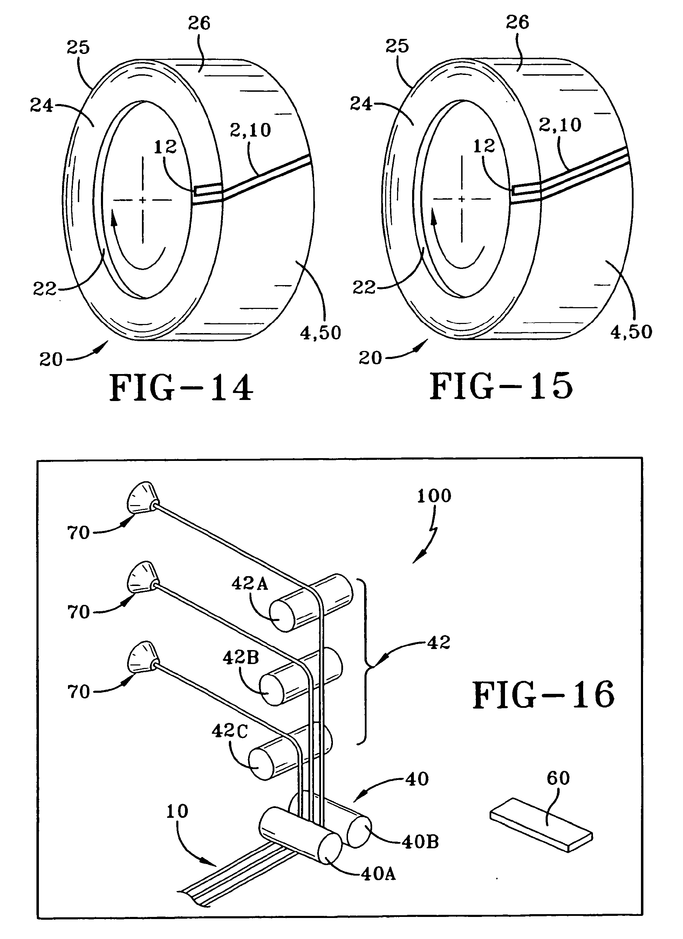

With reference to Figures 10-15, attention is drawn to the three dimensional view of a cylinder representing how the ply path 10 is initiated along what would generally be considered the bead region 22 of the carcass 20 along the tire sidewall 24 toward the shoulder region 25 of the toroidal surface 50 and then traverses across the toroidal surface 50 in an area commonly referred to as the crown 26 as illustrated in Figure 11. In Figure 11 it will be noticed that the ply cord path 10 is laid at a slight angle. While the ply path 10 may be at any angle including radially at 90° or less, the ply path 10 also can be applied in a non-linear fashion. As shown in Figure 12, once the ply cord 2 is traversed completely across the toroidal surface 50 and down the opposite side the loop 12 is formed as previously discussed and the cord 2 is brought back across the crown 26 as shown in Figure 12. In Figure 13 the cord 2 then proceeds down the tire sidewall 24 towards the bead region 22 where it is turned forming a loop 12 as previously discussed and then traverses back across the toroidal surface 50 in a linear path 10 as illustrated that is parallel to the first and second ply cord paths 10. This process is repeated in Figures 14 and 15 as the toroidal surface 50 is indexed, creating a very uniform and evenly spaced ply cord path 10.

With reference to Figure 16, the ply mechanism 70 can be provided with additional rollers 40 such that multiple paths 10 can be traversed around the toroidal surface 50. As illustrated three dispensing spools 74 are shown traversing three rollers 40A, 40B, 40C that are spaced in a staggered sequence permitting the openings between each pair of rollers to continue to guide the cords 2 while the lower or bottom pair of rollers 40A, 40B provide the stitching of the cords 2 to the toroidal surface 50. Again the same loop mechanism 60 can be used for clinching the cords 2 at each loop end 12. As illustrated only one loop mechanism 60 is shown. However, it is understood that there would be a pair of loop mechanisms, one being on each side of the toroidal surface 50.

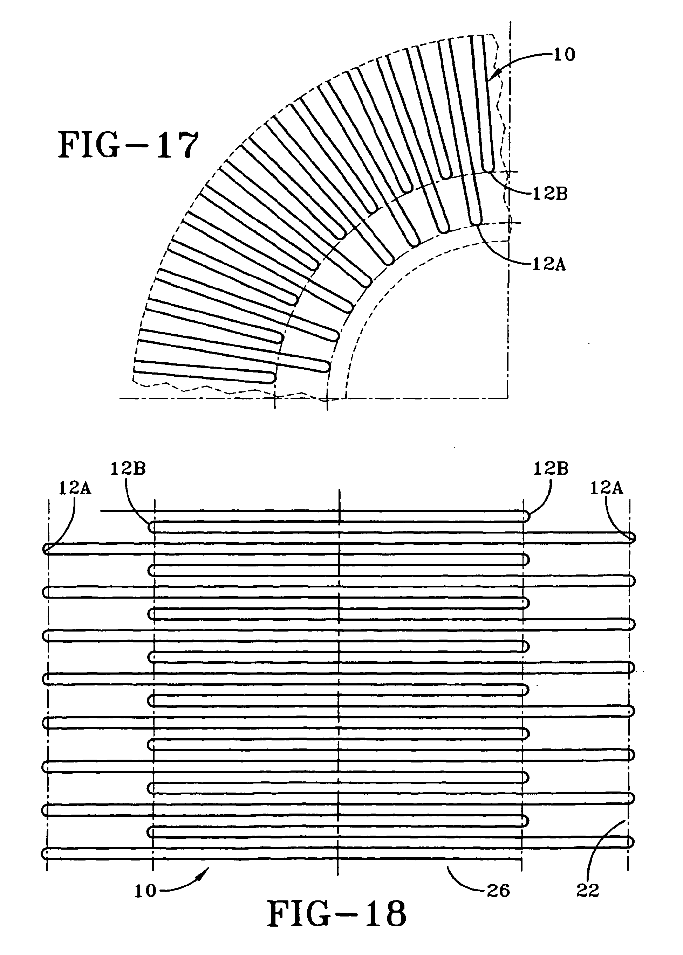

With reference to Figure 17, a ply path 10 is shown whereby the loop ends 12B can be adjusted radially outwardly. As illustrated the loop 12, while being part of a continuous strand of cord 2, is only partially shown going up to the sidewall 26 and terminating there. This continuous strand of cord 2 would create a path 10 whereby the loop ends 12B of the first set of adjacent pairs of cord paths 10 has loop ends 12B at a diameter slightly higher than the second pair of loop ends 12A. This is repeated in an alternating fashion. This particular cord path 10 creates the cord path 10 as illustrated in Figure 18 shown in a lay flat position. The advantage of this type of cord path 10 is that fewer cord ends 12A are spaced at the bead attachment area 22 while in the crown area 26 additional ply cord paths 10 are added. This is a tremendously important feature of the present mechanism 100 in that depending on the ply cord diameter the ends per inch are physically limited by the diameter of the cord. For example, passenger tires typically cannot exceed 30 ends per inch with minimum rivet or rubber spaced between the cords 2. In order to achieve a higher ends per inch fine cords 2 must be used and there is a limit to the strength of such fine cords 2. However, as the tire carcass with a flat formed ply expands into the toroidal configuration, the ply cord spacing or pitch is stretched in such a fashion that the cords per inch near the crown area 26 of the tire are oftentimes at least half the number in the bead area. This physical limitation can be corrected by the judicious use of the ply endings 12 in different diameters as illustrated in Figures 18 through 21. In Figure 18, a cord spacing of 30 ends per inch could achieve a crown cord spacing of 30 ends per inch, the reason being the doubling of the cords in the crown area is achieved by shifting the looped end 12B slightly above the bead area 22. Thus in the toroidal shaped ply path 10 it is possible to maintain a uniform ply path all the way across the carcass structure. This enables the tire designer to possibly use finer cords or fewer cords and yet still achieve the same strength of present day tires.

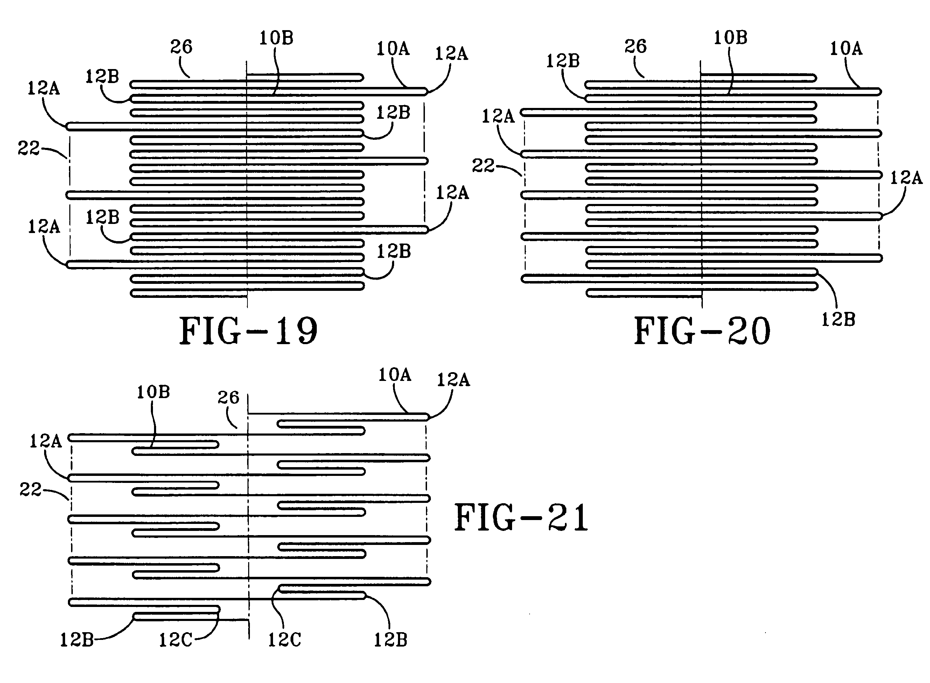

With reference to Figure 19, it is illustrated that one long ply cord path 10A can be used across the tire and then the two short ply cord paths 10B can be applied, then one long cord ply path 10A on the opposite side. The long ply cord paths 10A are circumferentially offset on a pattern of two short paths 10B being between each circumferentially offset long ply cord paths 10A; thereby four such ply cord path short ends 12B are on each side between the long ends 12A as illustrated in Figure 19.

Figure 20 shows a ply path construction whereby only one such short ply cord path 10B is between circumferentially offset long paths 10A. In Figure 21, each ply cord path 10 creates a circumferentially offset long ply path 10A. Thus on each half of the ply cord path as shown in Figure 21 there is a long 10A, then a short 10B, then a long ply cord path 10A formed by loop ends 12A, 12B, and 12C as shown.

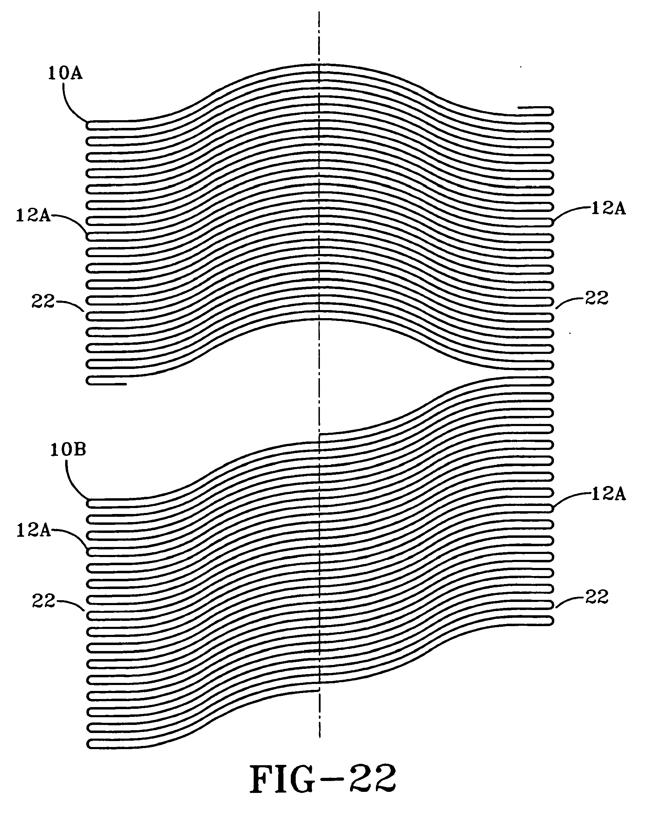

With reference to Figure 22, two ply cord paths 10A, 10B are shown that extend end to end in a repeating fashion. The ply cord paths 10A, 10B as illustrated show the possibility of creating two layers. A first layer of parallel ply cord paths 10Ais shown with a curvature in one direction. The second ply cord path 10B of Figure 22 could be a second layer of ply cord paths that could be applied continuously over the top of the first ply cord path 10A. Both of these ply cords paths 10A, 10B as illustrated in Figure 22 illustrate the ability to make nonlinear cord paths in a uniform fashion. This technique greatly facilitates the construction of true geodesic ply path cord tires as a viable and manufacturingly feasible tire. Almost all nonlinear or geodesic type ply cord paths 10 are simply approximations due to the fact that the cords 2 are not laid in a fashion that is truly representative of the tire's internal shape or inflated shape as cured. As Purdy, in his book, Mathematics Underlying the Design of Pneumatic Tires, noted at page 84, "It is virtually impossible, by any acceptable means, to produce tire beads by the winding process that are uniform in size, shape, or in tension in the cords in the bead region. It is largely for such reasons that the cord winding machines have been of limited value in forming geodesic cord paths." The present invention allows the ply cord paths to be placed in almost exactly the same position as the cured tire making such non-linear plied tires feasible.

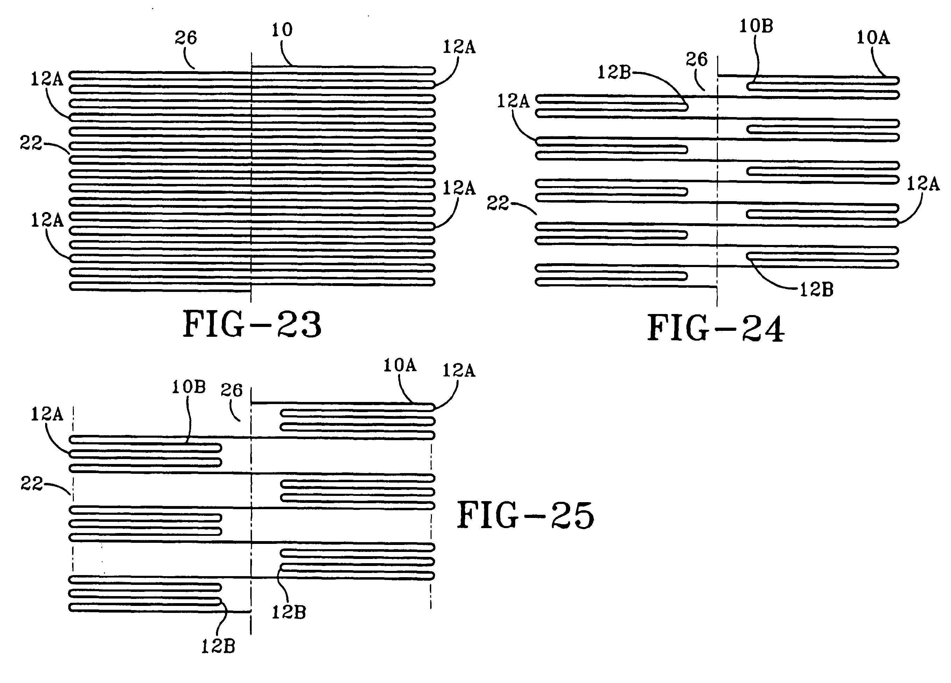

With reference to Figure 23 the ply 20 shows how a standard tire currently manufactured could be built where all the ply endings 12 are at the same location.

With reference to Figure 24 and Figure 25, predetermined ply paths 10 are designed such that the sidewall will have an increased number of cords extending up toward the crown area 26 but will stop short of crossing the crown 26 at loop end 12B and will return back traversing back and then create a continuous ply across the entire toroidal surface 50. These ply paths 10, whereby only a portion of the ply cords 2 actually crosses the centerline of the tire under the crown area 26, can be advantageously used. In most light weight passenger and truck tires, the cords 2 crossing the centerline are of little structural value based in part to the tire's belt reinforcing structure which arguably transmits all the loads across the tire crown area 26. Accordingly, the use of a large number of ply cords 2 across the crown area 26 is a redundancy that adds no great structural value. What is interesting about the ply cord paths 10 of Figures 24 and 25 is that they take advantage of what otherwise could be entitled a split ply concept but with the advantage that at least every second or every third ply cord path 10 crosses the crown 26 creating enhanced structural value. In other words, instead of simply relying on split ply paths 10B these have an alternating continuous ply path 10A across the crown 26 that provides additional safety and reliability factors.

## Claims

1. A method of manufacturing an annular toroidally shaped cord reinforced ply for a tire comprising the steps of:
- applying an elastomeric layer (4) on a toroidal surface (50);
- placing and stitching one or more cords (2) in continuous lengths onto the elastomeric layer (4) in predetermined cord paths;
- holding each cord (2) against the elastomeric layer (4) after the cord (2) is placed and stitched;
- indexing the cord path to a next circumferential location;
- forming a loop end (12) by reversing the direction of the cord (2); and
- releasing the held cord (2) after the loop end (12) is formed and the cord path direction is reversed;
wherein the toroidal surface (50) has a radially inner portion (54) on each side (56) having a concave curvature and a crown area (55) having a convex curvature, wherein the concave curvature extends radially outward toward the crown area (55), and wherein the step of placing and stitching each cord (2) includes traversing the cord (2) across a path including at least one of said concave curvatures and at least a portion of the convex crown area (55), **characterized in that** the step of forming the loop ends (12) includes locating one or more loop ends at a radially inner diameter and one or more adjacent loop ends at a radially outer diameter in a repeating pattern on each side of the toroidally shaped elastomeric surface.

2. The method of claim 1, further comprising the step of:
- dispensing the one or more cords from spools (74) and/or
- guiding the cord (2) in predetermined paths as the cord (2) is being dispensed.

3. The method of at least one of the preceding claims, further comprising forming ply turn-ups by extending the elastomeric loops and the loops ends on each side of the toroidal surface.

4. The method of claim 1 wherein the step of forming the loop ends includes locating a plurality of the loop ends at a first radially inner diameter and a plurality of other loop ends at one or more radially outer diameters thereby forming ply paths having varying amounts of cords per cm at different locations on the toroidal surface.

## Patentansprüche

1. Verfahren zur Herstellung einer ringförmig toroidal geformten kordverstärkten Lage für einen Reifen, umfassend die Schritte des :
- Anbringens einer Elastomerlage (4) auf einer toroidförmigen Oberfläche (50) ;
- Platzierens und Anrollens eines oder mehrerer Korde (2) in kontinuierlichen Längen auf der Elastomerlage (4) in vorbestimmten Kordbahnen ;
- Haltens jedes Kords (2) gegen die Elastomerlage (4), nachdem der Kord (2) platziert und angerollt ist ;
- intermittierenden Weiterbewegens der Kordbahn zu einem nächsten Umfangsort ;
- Bildens eines Schlaufenendes (12) durch Umkehren der Richtung des Kords (2) ; und
- Loslassens des gehaltenen Kords (2), nachdem das Schlaufenende (12) gebildet und die Kordbahnrichtung umgekehrt ist ;
wobei die toroidförmige Oberfläche (50) einen radial inneren Teil (54) an jeder Seite (56) aufweist, der eine konkave Krümmung hat, und einen Zenitbereich (55), der eine konvexe Krümmung hat, wobei die konkave Krümmung sich radial auswärts zu dem Zenitbereich (55) erstreckt, und wobei der Schritt des Platzierens und Anrollens jedes Kords (2) das Führens des Kords (2) in Querrichtung über eine Bahn umfasst, die mindestens eine der konkaven Krümmungen und mindestens einen Teil des konvexen Zenitbereichs (55) beinhaltet, **dadurch gekennzeichnet, dass** der Schritt des Bildens der Schlaufenenden (12) das Anordnen eines oder mehrerer Schlaufenenden an einem radial inneren Durchmesser und einer oder mehrerer Schlaufenenden an einem radial äußeren Durchmesser in einem sich wiederholenden Muster an jeder Seite der toroidförmigen Elastomerfläche beinhaltet.

2. Verfahren nach Anspruch 1, weiter den Schritt umfassend des :
- Abgebens des einen oder der mehreren Korde von Spulen (74), und/oder
- Führens des Kords (2) in vorbestimmten Bahnen bei der Abgabe des Kords (2).

3. Verfahren nach mindestens einem der vorhergehenden Ansprüche, weiter das Bilden von Lagenumschlägen durch Verlängern der Elastomerschlaufen und der Schlaufenenden an jeder Seite der toroidförmigen Oberfläche umfassend.

4. Verfahren nach Anspruch 1, wobei der Schritt des Bildens der Schlaufenenden das Anordnen einer Vielzahl der Schlaufenenden an einem ersten radial inneren Durchmesser und einer Vielzahl anderer Schlaufenenden an einem oder mehreren radial äußeren Durchmessern beinhaltet, wodurch Lagenbahnen mit variierenden Kordanzahlen pro cm an unterschiedlichen Stellen auf der toroidförmigen Oberfläche gebildet werden.

## Revendications

1. Procédé de fabrication d'une nappe de configuration toroïdale annulaire renforcée par des câblés pour un bandage pneumatique, comprenant les étapes consistant à :
- appliquer une couche élastomère (4) sur une surface toroïdale (50) ;
- placer et piquer un ou plusieurs câblés (2) en longueurs continues sur la couche élastomère (4) en suivant des voies de câblés prédéterminées :
- maintenir chaque câblé (2) contre la couche élastomère (4) après avoir placé et après avoir piqué le câblé (2) ;
- transférer la voie de câblés à un endroit circonférentiel suivant ;
- former une extrémité en boucle (12) en inversant la direction des câblés (2) ;
- relâcher le câblé maintenu (2) après la formation de l'extrémité en boucle (12) et après l'inversion de la direction de la voie de câblés ;
dans lequel la surface toroïdale (50) possède une portion interne (54) en direction radiale de part et d'autre (56) possédant une courbure concave et une zone de sommet (55) possédant une courbure convexe ; dans lequel la courbure concave s'étend en direction radiale vers l'extérieur dans la direction de la zone de sommet (55) ; et l'étape de placement et de piquage de chaque câblé (2) comprenant le fait de faire passer le câblé (2) à travers une voie englobant au moins une desdites courbures concaves et au moins une portion de la zone de sommet convexe (55), **caractérisé en ce que** l'étape consistant à former les extrémités en boucle (12) comprend le fait de disposer une ou plusieurs extrémités en boucle à un diamètre interne en direction radiale et une ou plusieurs extrémités adjacentes en boucle à un diamètre externe en direction radiale en un motif qui se répète de part et d'autre de la surface élastomère de configuration toroïdale.

2. Procédé selon la revendication 1, comprenant en outre les étapes consistant à :
- distribuer lesdits un ou plusieurs câblés à partir de bobines (74) et/ou
- guider le câblé (2) dans des voies prédéterminées lorsque le câblé (2) est distribué.

3. Procédé selon au moins une des revendications précédentes, comprenant en outre le fait de former des retournements de nappes en étendant les boucles élastomères et les extrémités en boucle de part et d'autre de la surface toroïdale.

4. Procédé selon la revendication 1, dans lequel l'étape consistant à former les extrémités en boucle englobe le fait de disposer plusieurs extrémités en boucle à un premier diamètre interne en direction radiale et plusieurs autres extrémités en boucle à un ou plusieurs diamètres externes en direction radiale, pour ainsi former des voies de nappes possédant des quantités variables de câblés par cm à différents endroits sur la surface toroïdale.
